# EUROPÄISCHE PATENTSCHRIFT

(11) **EP 1 181 462 B1**
(45) Veröffentlichungstag und Bekanntmachung des Hinweises auf die Patenterteilung: **27.07.2005**
(21) Anmeldenummer: 01921148.1
(22) Anmeldetag: 09.02.2001
(51) Int. Cl.: F16C 11/00

(54) **KUGELGELENK**
BALL JOINT
JOINT A ROTULE

(30) Priorität: 09.02.2000 DE 10005979
(43) Veröffentlichungstag der Anmeldung: 27.02.2002
(73) Patentinhaber: ZF Lemförder Metallwaren AG, 49441 Lemförde (DE)
(72) Erfinder: BRÖKER, Klaus, 49163 Bohmte-Hunteburg (DE); BUHL, Reinhard, 49163 Bohmte (DE); KLEINER, Wolfgang, 49419 Wagenfeld (DE); RECHTIEN, Martin, 49434 Neuenkirchen-Vörden (DE)
(86) Internationale Anmeldenummer: PCT/DE2001/000510
(87) Internationale Veröffentlichungsnummer: WO 2001/059312

(56) Entgegenhaltungen:
- EP-A- 0 082 638
- EP-A- 0 860 619
- EP-A- 0 867 158
- US-A- 3 108 830
- US-A- 5 395 176
- US-A- 5 678 947

## Beschreibung

Kugelgelenke finden auf vielfältigsten Gebieten, aber insbesondere im Fahrzeugbau, in Baugruppen für die Radaufhängung Einsatz.
Derartige Kugelgelenke bestehen aus einem wenigstens einseitig offenen Gelenkgehäuse mit einer Gehäuseausnehmung, einem in der Gehäuseausnehmung mit seiner mit einem Oberflächenschutz versehenen Gelenkkugel gelagerten Gelenkzapfen, dessen Zapfenabschnitt aus einer Gehäuseöffnung herausragt. Zwischen dem Gelenkgehäuse und der Gelenkkugel wird eine Lagerschale angeordnet, die für die hohen Belastungen derartiger Gelenke in Kraftfahrzeugen notwendig ist.
Sehr wesentlich für die dauerhafte Funktion des Kugelgelenks (Langzeitlebensdauer) ist es dabei, konstruktive Maßnahmen zu treffen, die eine Dauerschmierung mit Gelenkfett ermöglichen. Dadurch wird die Reibung zwischen den relativ zueinander beweglichen Bauteilen erheblich reduziert. Als Fettreservoir dient bei herkömmlichen Gelenken ein Dichtungsbalg.
Der Dichtungsbalg ist jedoch auch für die Abdichtung der Gelenkbauteile von Kugelgelenken für Kraftfahrzeuge gegenüber Verunreinigungen und Umwelteinflüssen unentbehrlich. Aus diesem Grund kann die Lebensdauer eines Kugelgelenkes erheblich reduziert werden, wenn beispielsweise infolge mechanischer oder thermischer Überbeanspruchungen oder aufgrund einer erhöhten Ozonbelastung der Dichtungsbalg beschädigt und undicht wird beziehungsweise vorzeitig altert, sodass er seine Abdichtfunktion nicht mehr erfüllt.

Ein weiteres Problem ergibt sich aufgrund der Tatsache, dass Kraftfahrzeuge häufig mit Hochdruckreinigungsgeräten gesäubert werden. Wie festgestellt werden konnte, erzeugen diese Geräte Drücke, die in der Lage sind, den Dichtungsbalg zumindest kurzzeitig und geringfügig von den Gelenkbauteilen abzuheben. Dadurch auftretende Undichtheiten erlauben den Eintritt von unerwünschten Medien in das Gelenkinnere.

Technische Problemstellung der vorliegenden Erfindung ist es, eine verbesserte Abdichtung des Kugelgelenkes gegen Eindringen von Verunreinigungen oder Feuchtigkeit zwischen Lagerschale und Gelenkkugel bei gleichzeitig optimierter Schmierfunktion der beweglichen Gelenkbauteile zu erreichen.

Die technische Problemstellung wird erfindungsgemäß durch ein Kugelgelenk mit den Merkmalen des Hauptanspruchs 1 gelöst.

Danach wird vorgeschlagen, den in das Gelenkgehäuse einzusetzenden und in seiner Lage fixierten Verschlussring auf der Seite der Gehäuseöffnung, durch die der Zapfenabschnitt des Gelenkzapfens aus dem Gelenkgehäuse herausragt, mit einer unter elastischer Vorspannung an der Gelenkkugel anliegenden Dichtlippe auszustatten.

Für die Umsetzbarkeit der Erfindung ist es wesentlich, dass die Gelenkkugel mit einem Oberflächenschutz versehen ist, sodass sie infolge dieser Behandlung eine äußerst geringe Rauheit sowie einen Korrosionsschutz aufweist, weil nur dadurch eine lange Lebensdauer der mit der Gelenkkugel in Gleitkontakt stehenden Dichtlippe gewährleistbar ist. Die maximale Rauhtiefe (Ry) sollte dabei etwa zwischen 1 und 5 µm betragen.

Die Erfindung bringt mehrere Vorteile mit sich. So könnten innerhalb des Kugelgelenkes zwei unterschiedliche Fettsorten zum Einsatz gebracht werden, ohne dass eine Vermischung zu befürchten ist. Eine erste Schmierfettsorte mit optimalen Schmier- und Gleiteigenschaften ist dabei zwischen Gelenkkugel und Lagerschale vorgesehen, wobei die Dichtlippe das Fettreservoir abdichtet und in diesem Gelenkbereich hält. Eine zweite Fettsorte, wird im Dichtungsbalg aufgenommen und erfüllt hauptsächlich eine Abdichtfunktion.

Die zusätzliche Dichtlippe innerhalb des Kugelgelenkes gewährleistet somit nicht nur eine optimale Gelenkschmierung, sondern gleichzeitig auch eine optimale Abdichtfunktion, was insbesondere bei Einsatz von Hochdruckreinigungsgeräten von erheblichem Vorteil gegenüber bisher bekannten Ausführungen ist. Unter Umständen könnte ein erfindungsgemäßes Kugelgelenk sogar gänzlich ohne Dichtungsbalg auskommen. Auf jeden Fall können aber die Aufwendungen zur Erreichung eines Festsitzes des Dichtungsbalges reduziert werden, sodass es möglich erscheint, auf den Einsatz von Spannringen zu verzichten, wodurch nicht nur die Zahl der vorhandenen Bauteile sondern auch die Aufwendungen bei der Montage erfindungsgemäßer Kugelgelenke und damit die Kosten reduziert werden können.

Vorteilhafte Weiterbildungen der Erfindung sind durch die Unteransprüche gegeben.

So kann der an der dem Zapfenabschnitt des Gelenkzapfens zugewandten Seite flanschförmig ausgebildete Verschlussring auf seiner Außenkontur wenigstens eine Ausformung aufweisen, mittels der der in das Gelenkgehäuse einzupressende Verschlussring mit mindestens einer Ausnehmung der Innenfläche des Gelenkgehäuses lagefixiert in Eingriff gebracht ist.

Gemäß einer weiteren Ausgestaltung eines erfindungsgemäßen Kugelgelenkes wird ferner vorgeschlagen, die Dichtlippe aus Gummi herzustellen und diese an dem Verschlussring anzuvulkanisieren, das heißt ein einteiliges Bauteil mit dem Verschlussring herzustellen oder sie in eine in den Verschlussring eingearbeitete Nut einzulegen.

Gemäß der Erfindung kann die Ausformung auf der Außenkontur des Verschlussringes gegenüber den benachbarten Bereichen seiner Außenkontur vorteilhafterweise eine Höhe zwischen 0,2 und 0,3 mm aufweisen. Dies ist bereits ausreichend, um durch den Eingriff dieser Ausformung in einer korrespondierenden Ausnehmung des Gelenkgehäuses mit einer der Höhe der Ausformung unter Berücksichtigung von Toleranzen entsprechenden Tiefe eine signifikante Erhöhung der Ausreißfestigkeit zu erreichen.

Gleichzeitig wird im Fertigungsprozess, insbesondere bei der zumindest partiellen Materialverformung, durch die der flanschförmige Abschnitt des Verschlussringes in dem Gelenkgehäuse festgelegt wird und die ebenso durch ein Umbördeln der Endbereiche des Gelenkgehäuses erfolgen kann, eine Verschiebung der Lagerschale im Gelenkgehäuse verhindert. Bei der gebrauchsgemäßen Beanspruchung des Gelenkes gewährleistet die erfindungsgemäße Lösung eine sichere Fixierung der Lagerschale gegen ein Verrutschen, was infolge zulässiger Taumelbewegungen des Gelenkzapfens ansonsten auftreten könnte.

Eine Weiterbildung der Erfindung besteht vorliegend darin, daß die Ausformung auf der Außenkontur des Verschlussringes die Form eines umlaufenden Ringes aufweist, der in eine an der Innenfläche des Gelenkgehäuses umlaufende Nut eingreift. Selbstverständlich können auch mehrere umlaufende ringförmige Ausformungen vorhanden sein, die beispielsweise eine sägezahnförmige Kontur aufweisen.

Werden mehrere umlaufend ringförmige Ausformungen mit einer sägezahnförmigen Kontur eingesetzt, so kann es von Vorteil sein, eine erste Flanke dieser sägezahnförmigen Kontur gegenüber jeder weiteren Flanke verlängert auszuführen und dadurch die in Richtung der Gehäuseöffnung geneigt verlaufende Ausformung mit der eine gleiche Neigung aufweisenden, an der Innenfläche des Gelenkgehäuses umlaufenden Nut verzahnend in Eingriff zu bringen. Der Festsitz des Verschlussringes in dem Gelenkgehäuse wird dadurch erheblich verbessert.

Zur Gewichtseinsparung und zur Verbesserung der Elastizität der miteinander kontaktierenden Bauteile ist es ferner möglich, daß die an der Außenkontur des Verschlussringes ausgebildete, ringförmig umlaufende Ausformung bereichsweise unterbrochen ist oder daß die Lagerschale wenigstens abschnittsweise in dem an der Innenkontur des Verschlussringes anliegenden Bereich eine gegenüber ihrer sonstigen Wandstärke reduzierte Wandstärke aufweist.

Um den Eintrag von Verunreinigungen in den Bereich zwischen Lagerschale und Gelenkkugel zu vermeiden, ist es ferner vorteilhaft, einen fließenden Übergang von der Gelenkkugel zu dem Zapfenabschnitt des Gelenkzapfens vorzusehen, das heißt, den Übergangsradius R zwischen der Gelenkkugel und dem Zapfenabschnitt des Gelenkzapfens minimal zu halten. Erfindungsgemäß soll in diesem Bereich keine Kehlung vorhanden sein.

Nachfolgend wird die Erfindung anhand eines Ausführungsbeispiels näher erläutert. Dabei zeigen:
- Figur 1:: Eine Gesamtansicht eines erfindungsgemäßen Kugelgelenkes in einer Schnittdarstellung,
- Figur 1a:: eine Ansicht eines Kugelgelenkes in einer Schnittdarstellung, das nicht der Erfindung nach Anspruch 1 entspricht,
- Figur 1b:: eine Ansicht eines dritten erfindungsgemäßen Kugelgelenkes in einer Schnittdarstellung,
- Figur 2:: Die Einzelheit X gemäß der Figur 1,
- Figur 3:: Die Einzelheit Y gemäß der Figur 1,
und
- Figur 4:: ein Kugelgelenk nach dem Stand der Technik.

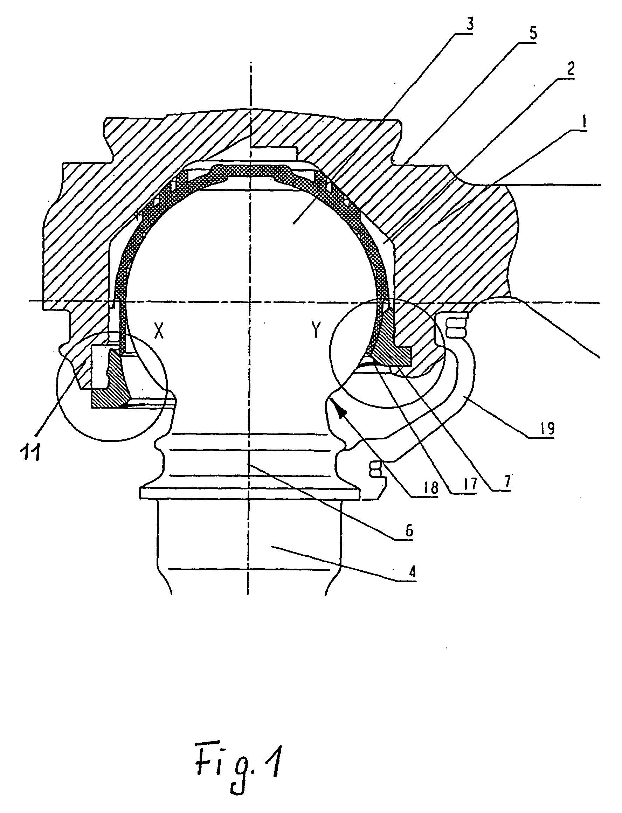

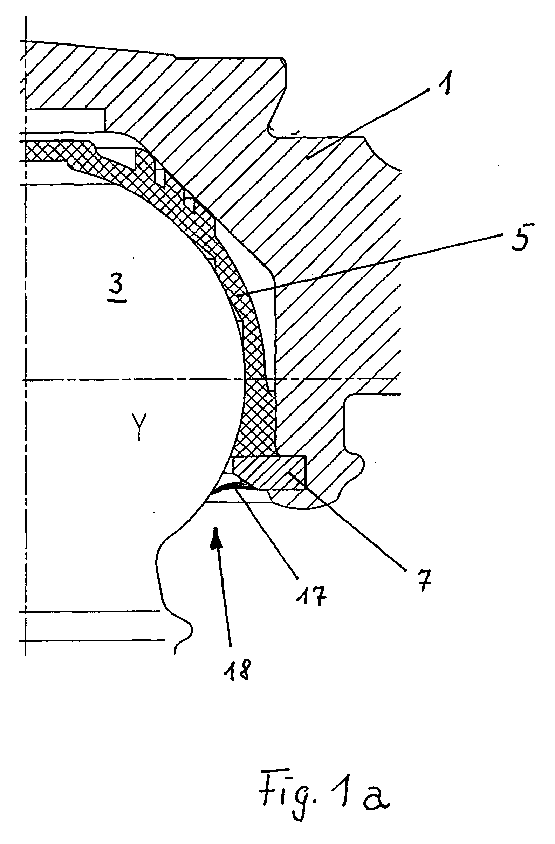

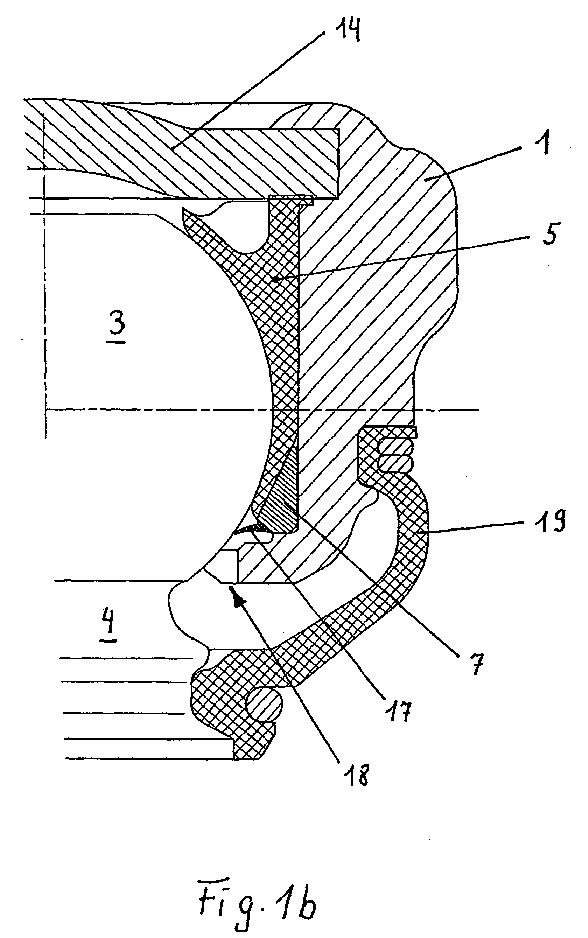

Die Figuren 1, 1a, 1b zeigen Schnittdarstellungen erfindungsgemäßer Kugelgelenke.
Die Darstellung der Figur 1 wurde zur besseren Veranschaulichung in zwei Teile unterteilt. Links der Symmetrieachse 6 ist das Lager vor dem Einpressen des Verschlussringes 7 und dem nachfolgenden teilweisen Umbördeln des Gelenkgehäuses 1 dargestellt. Der Teil rechts der Symmetrieachse 6 veranschaulicht das Lager im fertig montierten Zustand, also mit eingepresstem Verschlussring 7. Wie zu erkennen, ist die Gelenkkugel 3 des Gelenkzapfens 4 gemeinsam mit der diese umgebenden Lagerschale 5 in der Gehäuseausnehmung 2 des Gelenkgehäuses 1 aufgenommen. Die Lagerschale 5 ist an mehreren Positionen der Innenfläche 13 des Gelenkgehäuses 1 gegen die von der napfartigen Gehäuseausnehmung 2 gebildete Innenfläche 13 abgestützt. Der Verschlussring 7 ist aufgrund seiner flanschförmigen Ausbildung an der durch das Umbördeln der Enden 11 des Gelenkgehäuses 1 entstandenen, ringförmig umlaufenden Fläche 12 abgestützt. Er weist an der Seite der Gehäuseöffnung 18 eine Dichtlippe 17 auf, die einteilig an den Verschlussring angespritzt wurde. Die Lagerschale 5 ist aus Kunststoff und der Verschlussring 7 aus einem metallischen Werkstoff gefertigt. Zur äußeren Abdichtung des Kugelgelenkes dient ein Dichtungsbalg 19, dessen Innenraum ein Fettreservoir darstellt.

In der Figur 1a ist ein Kugelgelenk gezeigt, dessen Verschlussring 7 keine Verzahnung im Sinne der zuvor beschriebenen Ausführung aufweist, sondern einfach durch Umbördeln des Endbereiches des Gehäuserandes 11 festgesetzt ist. Der Verschlussring weist eine annähernd rechteckige Querschnittsform auf, wobei an einer Phase auf der der Gelenkkugel 3 zugewandten Seite die Dichtlippe angeformt ist.

In der Figur 1b ist hingegen ein Kugelgelenk dargestellt, das ein Gelenkgehäuse 1 aufweist, welches zwei gegenüberliegende Öffnungen aufweist. Die Gehäuseöffnung 18 wird in der zuvor beschriebenen Weise von dem Gelenkzapfen 4 durchdrungen, während die zweite, obere Öffnung durch Auflage eines Deckels 14 verschlossen ist, der seinerseits durch eine Materialverformung des oberen Gehäuserandes festgelegt ist. Der Verschlussring 7 weist ebenfalls keine Verzahnung auf. Er ist in axialer Richtung in die Gehäuseausnehmung 2 eingeschoben.

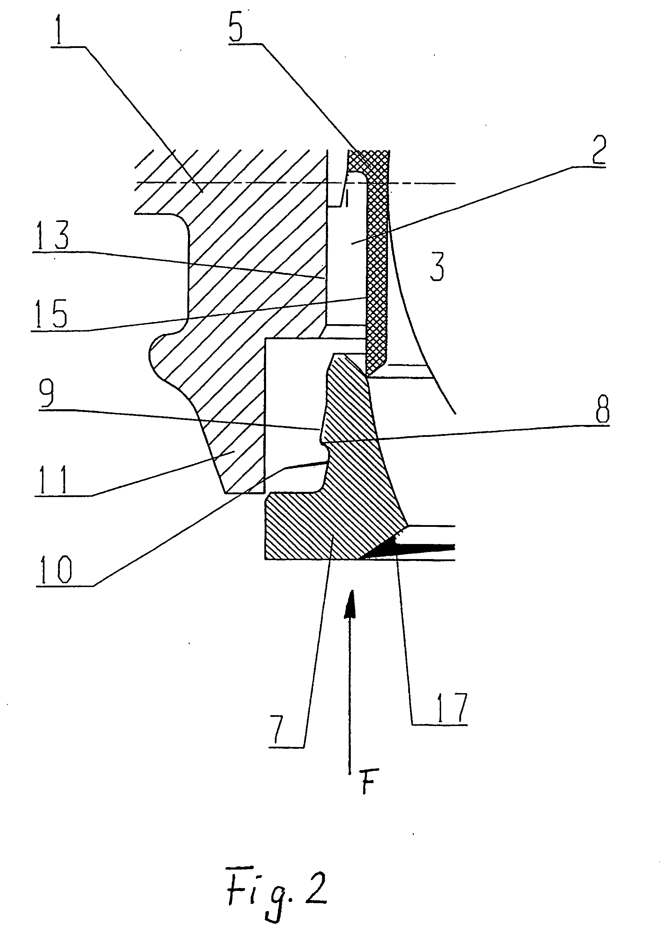

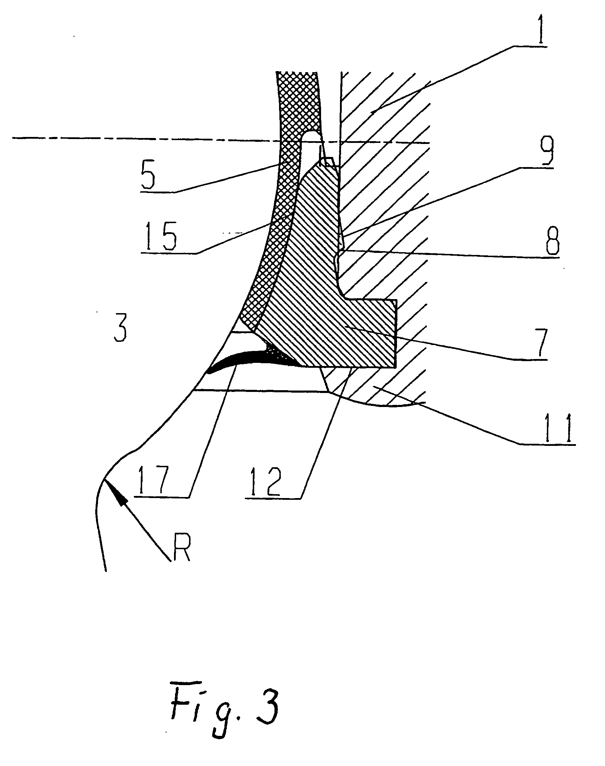

Die Figuren 2 und 3, welche Einzelheiten X und Y der Figur 1 in vergrößerter Darstellung zeigen, verdeutlichen die Ausbildung des Verschlussringes 7 mit der angeformten Dichtlippe 17 nochmals im Detail. Wie zu erkennen, folgt der Verschlussring 7 an seiner Innenkontur im wesentlichen dem Verlauf der Außenkontur der Lagerschale 5. An der Außenkontur des Verschlussringes 7 ist die Ausformung 8 ausgebildet. Die Dichtlippe 17 liegt bei der Darstellung in Figur 3 gleitend an der Gelenkkugel 3 des Gelenkzapfens 4 an. Der Übergangsradius R zwischen Gelenkkugel und Zapfenabschnitt des Gelenkzapfens 4 ist sehr klein gehalten, das bedeutet, der Übergang ist sehr flach. Durch eine derartige Gestaltung, die Kehlen in dem Übergangsbereich vermeidet, kann erreicht werden, dass beim Verschwenken des Gelenkzapfens die Dichtlippe 17 stets dichtend anliegt und keine Verunreinigungen in das Gelenkinnere transportiert werden, die sich bei herkömmlichen, in diesem Bereich mit einer Kehle versehenen Gelenkzapfen, dort ablagern können.

In dem dargestellten Beispiel ist die Ausformung 8 entsprechend einer vorteilhaften Ausgestaltung der Erfindung ringförmig an der Außenkontur des Verschlussringes 7 umlaufend ausgebildet und weist einen sägezahnförmigen Querschnitt auf Insbesondere aus der Figur 2 ist zu erkennen, dass die eine Flanke 9 dieses sägezahnförmigen Querschnitts gegenüber der anderen Flanke 10 verlängert ist, sodass die ringförmig umlaufende Ausformung 8 in Richtung der Öffnung der Gehäuseausnehmung 2 geneigt verläuft.
Dadurch gelangt Sie in der Art eines Widerhakens mit einer an der Innenfläche des Gehäuses 1 umlaufenden und eine korrespondierende Neigung aufweisenden Nut in Eingriff, welche aus der Figur nicht zu ersehen ist. Es hat sich gezeigt, dass eine Ausbildung des Verschlussringes 7, bei der die an seiner Außenkontur ausgebildete Ausformung 8 eine Höhe von 0,2 bis 0,3 mm gegenüber der übrigen Außenfläche aufweist, eine Ausreißfestigkeit bewirkt, welche beispielsweise bei Kugelgelenken mit Aluminiumgehäusen nahezu doppelt so hoch wie die Ausreißkraft herkömmlicher, ohne eine entsprechende Ausformung des Verschlussringes ausgebildeter Kugelgelenke ist. Ähnliche Verhältnisse konnten bei der Messung der Widerstandsfähigkeit gegen ein Aushebeln des Gelenkzapfens 4 aus dem Gelenkgehäuse 1 festgestellt werden.

Die Figur 2 zeigt ferner das Detail des Kugelgelenks vor dem Einpressen des Verschlussringes 7. Das äußere Ende 11 des Gelenkgehäuses 1 ist in dieser Herstellungsphase noch nicht umgebördelt. Der Verschlussring 7 mit seiner Ausformung 8 wird zwischen das Gelenkgehäuse 1 und die Lagerschale 5 in die Ausnehmung 2 eingebracht und dort durch die Kraft F eingepresst. Dabei gelangt die ringförmige Ausnehmung 8 mit einer nicht dargestellten Ausnehmung bzw. Nut an der Innenfläche 13 des Gelenkgehäuses 1 in Eingriff. Da der Verschlussring 7 somit sicher innerhalb des Gelenkgehäuses 1 fixiert ist, unterbleibt bei dem anschließenden Umbördeln des Endbereiches 11 des Gelenkgehäuses das ansonsten durch die an der Rollkante auftretenden Kräfte vielfach auftretende Verschieben von Verschlussring 7 und Lagerschale 5 innerhalb der Gehäuseausnehmung 2. Dadurch ist sichergestellt, dass zwischen der Mittelachse des Verschlussringes 7 und der Mittelachse 6 des Gelenkgehäuses 1 kein unerwünschter Versatz auftritt. Nach dem Umbördeln des Gelenkgehäuses 1 wird der bereits durch seine Ausformung 8 im Gelenkgehäuse 1 fixierte Verschlussring 7 durch den sich dabei bildenden Gehäusekragen mit der Fläche 12 abgestützt. Durch den widerhakenähnlichen Eingriff des Verschlussringes 7 werden in axialer Richtung auftretende Zugkräfte nicht, wie üblich, ausschließlich von der Fläche 12 aufgenommen, so daß sich die Ausreißfestigkeit des Kugelgelenkes und seine Widerstandsfähigkeit gegen auftretende Hebelkräfte deutlich erhöhen.

Aus der Figur2 ist weiterhin zu erkennen, dass die Lagerschale 5 in dem Bereich 15 an dem der Verschlussring 7, wie aus der Figur3 ersichtlich, nach dem Einpressen, zur Anlage gelangt, eine verringerte Wandstärke aufweist. Dies führt in vorteilhafter Weise zu einer Herabsetzung der Axialelastizität. Zwar ist diese vorteilhafte Wirkung auch schon dann gegeben, wenn die Wandstärke der Lagerschale 5 in diesem Bereich 15 in bezug auf ihren Umfang nur abschnittsweise in ihrer Wandstärke reduziert ist, jedoch ist es vorteilhaft, wenn dieser Bereich 15 verringerter Wandstärke auf dem gesamten Umfang der Lagerschale 5 ausgebildet ist.

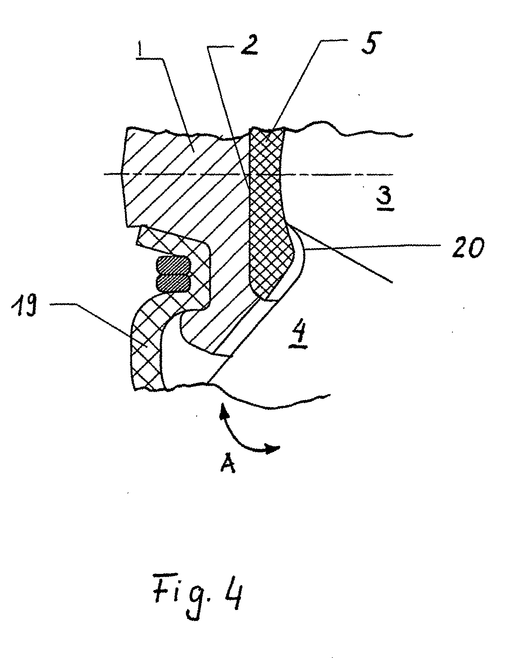

Die Figur 4 zeigt ausschnittsweise eine bekannte Kugelgelenkausführung, die insbesondere den Nachteil aufweist, dass im Übergangsbereich zwischen der Gelenkkugel 3 und dem Zapfenabschnitt des Gelenkzapfens 4 eine Kehlung 20 vorhanden ist. Der in Richtung des Pfeiles A verschwenkbare Gelenkzapfen 4 transportiert bei seiner Bewegung Verunreinigungen, die sich in der genannten Kehlung 20 befinden unmittelbar in die Lagerfläche zwischen Lagerschale 5 und Gelenkkugel 3, was anschaulich aus der Darstellung in Figur 4 hervorgeht.

### Liste der verwendeten Bezugszeichen:

- 1: Gelenkgehäuse
- 2: Gehäuseausnehmung
- 3: Gelenkkugel
- 4: Gelenkzapfen
- 5: Lagerschale
- 6: Mittelachse
- 7: Verschlussring
- 8: Ausformung
- 9: Flanke
- 10: Flanke
- 11: Endbereich Gelenkgehäuse
- 12: Fläche
- 13: Innenfläche
- 14: Deckel
- 15: Bereich
- 16 17: Dichtlippe
- 18: Gehäuseöffnung
- 19: Dichtungsbalg
- 20: Kehlung

## Patentansprüche

1. Kugelgelenk bestehend aus einem wenigstens einseitig offenen Gelenkgehäuse (1) mit einer Gehäuseausnehmung (2), einem in der Gehäuseausnehmung (2) mit seiner mit einem Oberflächenschutz versehenen Gelenkkugel (3) gelagerten Gelenkzapfen (4), dessen Zapfenabschnitt aus einer Gehäuseöffnung (18) herausragt, einer zwischen dem Gelenkgehäuse (1) und der Gelenkkugel (3) angeordneten Lagerschale (5) sowie einem die Gehäuseausnehmung (2) des Gelenkgehäuses (1) verschließenden und die darin angeordnete Lagerschale (5) im Gelenkgehäuse (1) verspannenden Verschlussring (7), der mit seiner Innenkontur durch eine Abschrägung oder einen ausgebildeten Radius der Außenkontur der Lagerschale (5) im wesentlichen folgt, **dadurch gekennzeichnet, dass,** der in das Gelenkgehäuse (1) einzusetzende Verschlussring (7) in dem Gelenkgehäuse (1) lagefixiert ist und auf der Seite der Gehäuseöffnung (18), durch die der Zapfenabschnitt des Gelenkzapfens (4) aus dem Gelenkgehäuse (1) herausragt, eine unter elastischer Vorspannung an der Gelenkkugel (3) anliegende Dichtlippe (17) aufweist.

2. Kugelgelenk nach Anspruch 1, **dadurch gekennzeichnet, dass** der an der dem Zapfenabschnitt des Gelenkzapfens (4) zugewandten Seite flanschförmig ausgebildete Verschlussring (7) auf seiner Außenkontur wenigstens eine Ausformung (8) aufweist, mittels der der in das Gelenkgehäuse (1) einzupressende Verschlussring (7) mit mindestens einer Ausnehmung der Innenfläche (13) des Gelenkgehäuses (1) lagefixiert in Eingriff gebracht ist.

3. Kugelgelenk nach Anspruch 2, **dadurch gekennzeichnet, dass** der flanschförmige Abschnitt des Verschlussringes (7) durch zumindest partielle Materialverformung in dem Gelenkgehäuse (1) festgelegt ist.

4. Kugelgelenk nach einem der vorstehend genannten Ansprüche, **dadurch gekennzeichnet, dass** die Dichtlippe (17) aus Gummi besteht und an dem Verschlussring (7) anvulkanisiert ist.

5. Kugelgelenk nach einem der Ansprüche 1 bis 3, **dadurch gekennzeichnet, dass** die Dichtlippe (17) in eine in den Verschlussring (7) eingebrachte Nut eingelegt ist.

6. Kugelgelenk nach einem der vorstehend genannten Ansprüche, **dadurch gekennzeichnet, dass** die Ausformung (8) auf der Außenkontur des Verschlussringes (7) gegenüber den benachbarten Bereichen seiner Außenkontur eine Höhe zwischen 0,2 mm und 0,3 mm hat.

7. Kugelgelenk nach einem der vorstehend genannten Ansprüche, **dadurch gekennzeichnet, dass** die Ausformung (8) auf der Außenkontur des Verschlussringes (7) die Form eines umlaufenden Rings aufweist, der in eine an der Innenfläche (13) des Gelenkgehäuses (1) umlaufende Nut eingreift.

8. Kugelgelenk nach einem der Ansprüche 2 bis 7, **dadurch gekennzeichnet, dass** mehrere an der Außenkontur des Verschlussringes (7) umlaufende ringförmige Ausformungen (8) eine sägezahnförmige Kontur bilden.

9. Kugelgelenk nach einem der Ansprüche 2 bis 7, **dadurch gekennzeichnet, dass** die an der Außenkontur des Verschlussringes (7) umlaufenden ringförmigen Ausformungen (8) eine sägezahnförmige Kontur aufweisen, wobei eine erste Flanke (9) dieser sägezahnförmigen Kontur gegenüber jeder weiteren Flanke (10) verlängert ist und die in Richtung der Gehäuseöffnung (18) geneigt verlaufenden Flanken (9, 10) mit gleiche Neigungen aufweisenden, an der Innenfläche (13) des Gelenkgehäuses (1) umlaufenden Nuten verzahnend in Eingriff gebracht sind.

10. Kugelgelenk nach einem der Ansprüche 2 bis 9, **dadurch gekennzeichnet, dass** die wenigstens eine an der Außenkontur des Verschlussringes (7) ausgebildete, ringförmig umlaufende Ausformung (8) bereichsweise unterbrochen ist.

11. Kugelgelenk nach einem der vorstehend genannten Ansprüche, **dadurch gekennzeichnet, dass** die Lagerschale (5) in dem an der Innenkontur des Verschlussringes (7) anliegenden Bereich (15) eine gegenüber ihrer sonstigen Wandstärke reduzierte Wandstärke aufweist.

12. Kugelgelenk nach Anspruch 11, **dadurch gekennzeichnet, dass** der an der Innenkontur des Verschlussringes (7) anliegende Bereich (15) der Lagerschale (5) in Bezug auf den Umfang der Lagerschale (5) abschnittsweise eine verringerte Wandstärke aufweist.

13. Kugelgelenk nach einem der vorstehend genannten Ansprüche, **dadurch gekennzeichnet, dass** der Außendurchmesser der Gelenkkugel (3) fließend in den Zapfenabschnitt des Gelenkzapfens (4) übergeht, das heißt, der Übergangsradius R zwischen Gelenkkugel (3) und Zapfenabschnitt des Gelenkzapfens (4) minimal gehalten oder gar nicht vorhanden ist und die maximale Oberflächenrauheit (Ry) der Gelenkkugel zwischen 1 und 5 µm beträgt.

## Claims

1. Ball joint consisting of a joint housing (1), which is open at least on one side and has a housing recess (2), a joint pin (4), which is mounted in the housing recess (2) with its joint ball (3) provided with a surface protection and whose pin portion projects out of a housing opening (18), a bearing shell (5), which is disposed between the joint housing (1) and the joint ball (3), and a locking ring (7), which closes the housing recess (2) of the joint housing (1) and secures the bearing shell (5) disposed therein in the joint housing (1) and substantially follows the outer contour of the bearing shell (5) with its inner contour through a bevel or a formed radius, **characterised in that** the locking ring (7) to be inserted in the joint housing (1) is fixed in position in the joint housing (1) and comprises a sealing lip (17), lying against the joint ball (3) under an elastic preload, on the side of the housing opening (18) through which the pin portion of the joint pin (4) projects out of the joint housing (1).

2. Ball joint according to Claim 1, **characterised in that** the locking ring (7), which is in the shape of a flange on the side facing the pin portion of the joint pin (4), comprises at its outer contour at least one shaped-out part (8) by means of which the locking ring (7) to be pressed into the joint housing (1) is engaged with at least one recess of the inner surface (13) of the joint housing (1) so as to be fixed in position.

3. Ball joint according to Claim 2, **characterised in that** the flange-shaped portion of the locking ring (7) is clamped in the joint housing (1) through at least partial material deformation.

4. Ball joint according to any one of the preceding Claims, **characterised in that** the sealing lip (17) consists of rubber and is vulcanised onto the locking ring (7).

5. Ball joint according to any one of Claims 1 to 3, **characterised in that** the sealing lip (17) is placed in a groove which is made in the locking ring (7).

6. Ball joint according to any one of the preceding Claims, **characterised in that** the shaped-out part (8) at the outer contour of the locking ring (7) is of a height of between 0.2 mm and 0.3 mm with respect to the adjacent areas of its outer contour.

7. Ball joint according to any one of the preceding Claims, **characterised in that** the shaped-out part (8) at the outer contour of the locking ring (7) is in the form of a circulating ring which engages in a groove circulating at the inner surface (13) of the joint housing (1).

8. Ball joint according to any one of Claims 2 to 7, **characterised in that** a plurality of annular shaped-out parts (8) circulating at the outer contour of the locking ring (7) form a sawtooth contour.

9. Ball joint according to any one of Claims 2 to 7, **characterised in that** the annular shaped-out parts (8) circulating at the outer contour of the locking ring (7) have a sawtooth contour, wherein a first flank (9) of this sawtooth contour is lengthened with respect to every further flank (10), and the flanks (9, 10), which are inclined in the direction of the housing opening (18), are engaged in interlocking fashion with grooves having the same inclinations and circulating at the inner surface (13) of the joint housing (1).

10. Ball joint according to any one of Claims 2 to 9, **characterised in that** the at least one annular circulating shaped-out part (8) formed at the outer contour of the locking ring (7) is interrupted in areas.

11. Ball joint according to any one of the preceding Claims, **characterised in that,** in the area (15) lying against the inner contour of the locking ring (7), the bearing shell (5) has a wall thickness which is reduced with respect to its normal wall thickness.

12. Ball joint according to Claim 11, **characterised in that** the area (15) of the bearing shell (5) lying against the inner contour of the locking ring (7) has a wall thickness which is reduced in sections in relation to the circumference of the bearing shell (5).

13. Ball joint according to any one of the preceding Claims, **characterised in that** the outside diameter of the joint ball (3) passes smoothly into the pin portion of the joint ball (4), i.e. the transition radius R between the joint ball (3) and the pin portion of the joint pin (4) is kept to a minimum or is even non-existent, and the maximum surface roughness (Ry) of the joint ball is between 1 and 5 µm.

## Revendications

1. Joint à rotule constitué par au moins un boîtier d'articulation (1) ouvert au moins d'un côté et comportant un logement de boîtier (2), un embout d'articulation (4) qui est monté dans le logement de boîtier avec sa rotule (3) équipée d'un système de protection de surface, et dont la partie formant embout fait saillie hors d'une ouverture (18) du boîtier, un coussinet de palier (5) disposé entre le boîtier (1) du joint et la rotule (3), ainsi qu'une bague de fermeture (7) qui ferme le logement de boîtier (2) du boîtier (1) du joint et serre dans le boîtier (1) du joint, le coussinet de palier (5) qui y est disposé, et dont le contour intérieur est adapté essentiellement, grâce à la présence d'un biseau ou d'un rayon choisi, au contour extérieur du coussinet de palier (5), **caractérisé en ce que** la bague de fermeture (7), qui doit être insérée dans le boîtier (1) du joint, possède une position fixe dans le boîtier (1) du joint et comporte une lèvre d'étanchéité (17) qui s'applique sous précontrainte élastique contre la rotule (3), du côté de l'ouverture (18) du boîtier, par laquelle la section de l'embout (4) du joint fait saillie hors du boîtier (1) du joint.

2. Joint à rotule selon la revendication 1, **caractérisé en ce que** la bague de fermeture (7) qui est agencée sous la forme d'une bride sur le côté tourné vers la section de l'embout (4) du joint, possède sur son contour extérieur au moins une partie conformée (8), au moyen de laquelle la bague de fermeture (7), qui doit être repoussée à force dans le boîtier (1) du joint, est amenée à engrener, dans une position fixe, avec au moins un évidement de la surface intérieure (13) du boîtier (1) du joint.

3. Joint à rotule selon la revendication 2, **caractérisé en ce que** la section en forme de bride de la bague de fermeture (7) est fixée à l'aide d'au moins une déformation partielle de matière dans le boîtier (1) du joint.

4. Joint à rotule selon l'une des revendications précédentes, **caractérisé en ce que** la lèvre d'étanchéité (17) est réalisée en caoutchouc et est fixée par vulcanisation sur la bague de fermeture (7).

5. Joint à rotule selon l'une des revendications 1 à 3, **caractérisé en ce que** la lèvre d'étanchéité (17) est insérée dans une gorge aménagée dans la bague de fermeture (7).

6. Joint à rotule selon l'une des revendications précédentes, **caractérisé en ce que** la partie conformée (8) agencée sur le contour extérieur de la bague de fermeture (7), possède, par rapport aux zones voisines de son contour extérieur, une hauteur comprise entre 0,2 mm et 0,3 mm.

7. Joint à rotule selon l'une des revendications précédentes, **caractérisé en ce que** la partie conformée (8) agencée sur le contour extérieur de la bague de fermeture (7), possède la forme d'un anneau périphérique, qui s'engage dans une gorge qui s'étend d'une manière périphérique sur la surface intérieure (13) du boîtier (1) du joint.

8. Joint à rotule selon l'une des revendications 2 à 7, **caractérisé en ce que** plusieurs parties conformées annulaires (8), qui s'étendent selon une disposition périphérique sur le contour extérieur de la bague de fermeture (7), forment un contour en dents de scie.

9. Joint à rotule selon l'une des revendications 2 à 7, **caractérisé en ce que** les parties conformées annulaires (8), qui sont disposées selon une disposition périphérique sur le contour extérieur de la bague de fermeture (7), possèdent un contour en dents de scie, et dans lequel un premier flanc (9) de ce contour en dents de scie est prolongé par rapport à chacun des autres flancs (10), et les flancs (9,10), qui sont inclinés en direction de l'ouverture (18) du boîtier, engrènent sous forme de dentures avec des gorges possédant une même inclinaison et qui s'étendent sur la périphérie de la surface intérieure (13) du boîtier (1) du joint.

10. Joint à rotule selon l'une des revendications 2 à 9, **caractérisé en ce que** la au moins une partie conformée périphérique annulaire (8), formée sur le contour extérieur de la bague de fermeture (7), est interrompue par endroits.

11. Joint à rotule selon l'une des revendications précédentes, **caractérisé en ce que** le coussinet de palier (5) possède, dans la partie (15) s'appliquant contre le contour intérieur de la bague de fermeture (7), une épaisseur de paroi qui est réduite par rapport à l'épaisseur de paroi qu'il possède ailleurs.

12. Joint à rotule selon la revendication 11, **caractérisé en ce que** la partie (15), qui s'applique contre le contour intérieur de la bague de fermeture (7), du coussinet de palier (5) possède une épaisseur de paroi réduite, par endroits, par rapport à la périphérie du coussinet de palier (5).

13. Joint à rotule selon l'une des revendications précédentes, **caractérisé en ce que** le diamètre extérieur de la rotule (3) se prolonge d'une manière continue par la section de l'embout (4) du joint, que le rayon de jonction R entre la rotule (3) et la section de l'embout (4) du joint est maintenu minimum ou même n'existe pas et que la rugosité de surface maximale (Ry) de la rotule est comprise entre 1 et 5 µm.
